# FASCICULE DE BREVET EUROPEEN

(11) **EP 1 099 612 B1**
(45) Date de publication et mention de la délivrance du brevet: **26.05.2004**
(21) Numéro de dépôt: 00402984.9
(22) Date de dépôt: 26.10.2000
(51) Int. Cl.: B61F 5/24, B60L 5/19

(54) **Ensemble comprenant un premier châssis et un deuxième châssis pendulant latéralement par rapport au premier châssis, et véhicule ferroviaire correspondant**
Vorrichtung mit einem ersten Rahmen und einem zweiten Rahmen, das lateral zum ersten Rahmen pendelt, und ein entsprechendes Schienenfahrzeug
Assembly comprising a first body and a second body swinging laterally with respect to the first body, and a corresponding railway vehicle

(30) Priorité: 10.11.1999 FR 9914168
(43) Date de publication de la demande: 16.05.2001
(73) Titulaire: Alstom, 75116 Paris (FR)
(72) Inventeur: Benard, Eric, 75003 Paris (FR); Friot, Laurent, 17200 Salles S/Mer (FR); Hazard, Laurent, 78770 Marcq (FR)
(74) Mandataire: de Lambilly Delorme, Marie Pierre

(56) Documents cités:
- DE-U- 29 613 541
- JP-A- 9 046 807

## Description

La présente invention a pour objet un ensemble pour véhicule ferroviaire, du type comprenant un premier châssis et un deuxième châssis relié au châssis fixe pour penduler latéralement par rapport à celui-ci de part et d'autre d'une position de repos, l'ensemble comprenant en outre des moyens de déplacement latéral du deuxième châssis.

L'invention s'applique, par exemple, à un ensemble de captage de courant pour un véhicule ferroviaire pendulaire.

Un tel véhicule ferroviaire est adapté pour que sa caisse s'incline latéralement par rapport à l'axe des essieux de ses bogies dans les parties courbes des voies ferrées.

Dans le cas d'un ensemble de captage de courant, le premier châssis est un châssis fixe destiné au montage de l'ensemble sur le toit d'un véhicule ferroviaire et, le deuxième châssis est un châssis mobile qui porte un pantographe appartenant à l'ensemble de captage de courant.

Si le véhicule ferroviaire est surmonté d'un tel ensemble pour capter le courant depuis un fil de contact d'une caténaire, il est alors nécessaire d'incliner latéralement le pantographe par rapport à la caisse dans le sens opposé au sens d'inclinaison de la caisse par rapport à ses essieux, pour limiter le déplacement latéral de l'archet du pantographe par rapport au fil de contact de la caténaire.

En effet, en l'absence d'une telle inclinaison en sens opposé du pantographe, appelée contre-pendulation, le déplacement relatif de l'archet par rapport au fil de contact pourrait être suffisamment important pour qu'il soit en contact uniquement avec des parties isolantes de l'archet ou même espacé latéralement de celui-ci, ce qui pourrait entraîner un endommagement de la caténaire et du pantographe, notamment lors du retour de la caisse dans sa position de repos.

Le document EP-A-785 100 sur lequel se fonde le préambule de la Revendication 1, décrit un ensemble de captage de courant du type précité dont le châssis mobile du support de pantographe est relié par quatre bielles au châssis fixe. Au repos, c'est-à-dire en l'absence de contre-pendulation, les points d'articulation des bielles forment transversalement un trapèze convergeant vers le bas. Le déplacement latéral du châssis mobile entraîne l'inclinaison latérale du pantographe par rapport à la caisse.

Le déplacement latéral du châssis mobile est assuré au moyen d'un ou plusieurs vérins de poussée latérale du châssis mobile disposé(s) d'un côté ou de part et d'autre du support de pantographe. Un système de commande pilote le(s) vérin(s) pour déplacer le châssis mobile et assurer la contre-pendulation du pantographe.

Pour assurer un déplacement satisfaisant du châssis mobile en limitant les mouvements parasites de translation et de rotation, il convient de prévoir des guides, contre lesquels le châssis mobile glisse, et de disposer un vérin latéral central de chaque côté du châssis mobile.

L'isolation électrique du pantographe par rapport au toit d'un véhicule ferroviaire est assurée par des isolateurs électriques disposés entre le pantographe et le châssis mobile.

Le bon fonctionnement de l'ensemble de captage de courant impose donc une structure complexe, volumineuse et sujette à des dissipations d'énergie mécanique par frottement au niveau des guides qui constituent donc des pièces d'usure.

L'encombrement important d'un tel ensemble de captage de courant est particulièrement gênant pour respecter les gabarits imposés aux véhicules ferroviaires sans limiter la hauteur disponible pour les passagers à l'intérieur du véhicule.

Un but de l'invention est de fournir un ensemble du type précité qui soit d'encombrement limité.

A cet effet, l'invention a pour objet un ensemble du type précité, caractérisé en ce que les moyens de déplacement comprennent un bras d'entraînement latéral du deuxième châssis, lequel bras est pivotant autour d'un axe longitudinal.

Selon des modes particuliers de réalisation, l'ensemble peut comprendre l'une ou plusieurs des caractéristiques suivantes, prise(s) isolément ou selon toutes les combinaisons techniquement possibles :
- le bras d'entraînement est relié au deuxième châssis en un point qui décrit sensiblement un arc de cercle centré sur ledit axe longitudinal lorsque le deuxième châssis pendule par rapport au premier châssis au voisinage de sa position de repos ;
- le deuxième châssis est relié au premier châssis par au moins deux liaisons oscillantes espacées latéralement l'une de l'autre ;
- le bras d'entraînement latéral du deuxième châssis est relié à ce dernier en un point situé latéralement sensiblement à égale distance des deux liaisons oscillantes lorsque le deuxième châssis est en position de repos ;
- chaque liaison oscillante comprend un support rigide de pendulation articulé, d'une part, au premier châssis en deux points espacés longitudinalement l'un de l'autre, et d'autre part au deuxième châssis en deux points espacés longitudinalement l'un de l'autre ;
- chaque support de pendulation comprend un étrier articulé par ses branches au premier châssis, et deux chapes qui prolongent la base de l'étrier et qui sont articulées au deuxième châssis ;
- chaque support de pendulation a un profil transversal de concavité dirigée vers l'intérieur de l'ensemble ;
- les chapes de chaque support de pendulation sont sensiblement orthogonales aux branches de l'étrier correspondant ;
- les points d'articulation des supports de pendulation aux premier et deuxième châssis forment transversalement, lorsque le deuxième châssis est en position de repos, un trapèze convergeant dans le sens allant dudit axe longitudinal vers un point du deuxième châssis auquel le bras d'entraînement est relié ;
- le bras d'entraînement est relié au deuxième châssis par une liaison pivotante et coulissante ;
- l'ensemble est un ensemble de captage de courant pour un véhicule ferroviaire comprenant un pantographe et un support de pantographe, le support de pantographe comprenant le premier châssis, pour monter l'ensemble sur le toit d'un véhicule ferroviaire, et le deuxième châssis qui porte le pantographe ;
- le bras pivotant est relié au deuxième châssis en un point situé en dessous dudit axe longitudinal lorsque l'ensemble de captage de courant est monté sur le toit d'un véhicule ferroviaire ;
- le premier châssis comprend des moyens d'isolation électrique du pantographe par rapport au toit d'un véhicule ferroviaire sur lequel l'ensemble est destiné à être monté ;
- le premier châssis comprend des isolateurs électriques qui forment pieds d'appui du premier châssis sur le toit d'un véhicule ferroviaire ;
- le premier châssis comprend quatre isolateurs électriques formant pieds d'appui disposés avec une configuration générale de carré ou de rectangle ;
- les moyens de déplacement du deuxième châssis comprennent certains des moyens d'isolation électrique ;
- les moyens de déplacement du deuxième châssis comprennent un moteur rotatif d'actionnement du bras d'entraînement du deuxième châssis, et l'arbre de sortie du moteur rotatif est orienté longitudinalement ;
- le moteur rotatif est relié au bras d'entraînement par un isolateur électrique.

L'invention a en outre pour objet un véhicule ferroviaire, caractérisé en ce qu'il comprend un ensemble tel que défini ci-dessus.

L'invention sera mieux comprise à la lecture de la description qui va suivre, donnée uniquement à titre d'exemple, et faite en se référant aux dessins annexés, sur lesquels :
- la figure 1 est une vue schématique partielle et en perspective illustrant le toit d'un véhicule ferroviaire selon l'invention,
- la figure 2 est une vue schématique en perspective éclatée du support de pantographe et des moyens de déplacement de l'ensemble de captage de courant du véhicule de la figure 1,
- la figure 3 est une vue schématique, en coupe longitudinale et agrandie, illustrant la liaison entre les moyens de déplacement et le châssis mobile des figures 1 et 2,
- les figures 4 et 5 sont des vues transversales schématiques illustrant le véhicule ferroviaire de la figure 1 respectivement en position de repos et en position de pendulation, et
- la figure 6 est une vue transversale, schématique et partielle d'un autre ensemble selon l'invention appliqué à un bogie de véhicule ferroviaire pendulaire.

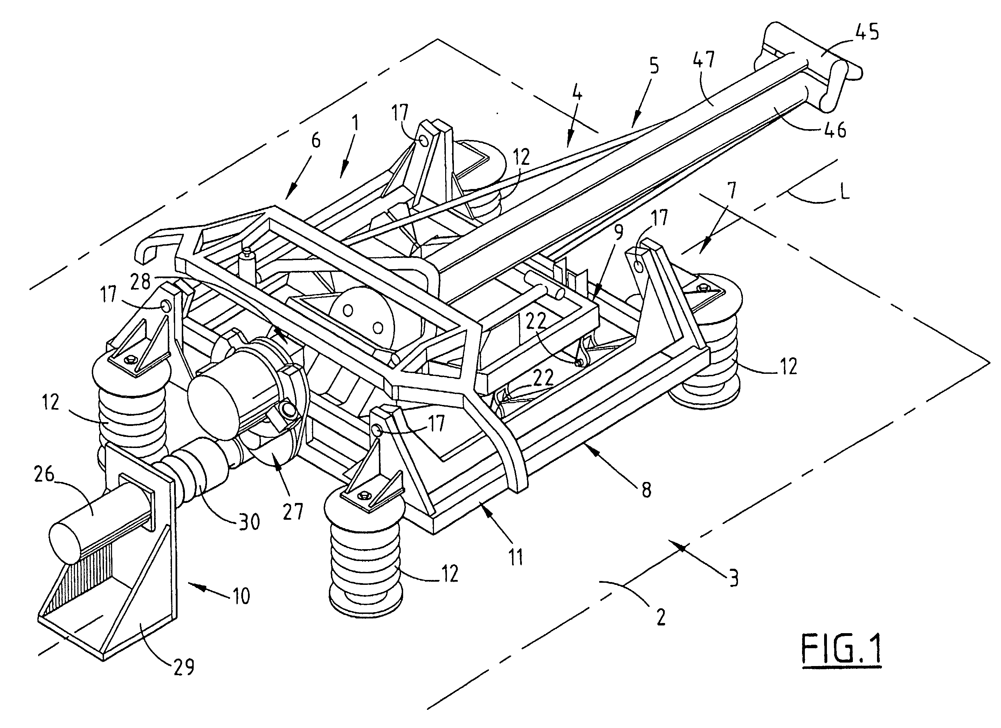

La figure 1 illustre un ensemble 1 de captage de courant surmontant le toit ou pavillon 2 d'un véhicule ferroviaire 3 pendulaire. Seule une partie du toit 2 est représentée schématiquement en traits mixtes sur la figure 1.

Cet ensemble 1 de captage de courant comprend essentiellement:
- un pantographe 4 comprenant lui-même un bras articulé 5 muni à une extrémité supérieure d'un archet 6,
- un support de pantographe 7 comprenant lui-même un premier châssis 8 fixe et un deuxième châssis 9 mobile, et
- des moyens 10 de déplacement du châssis mobile 9.

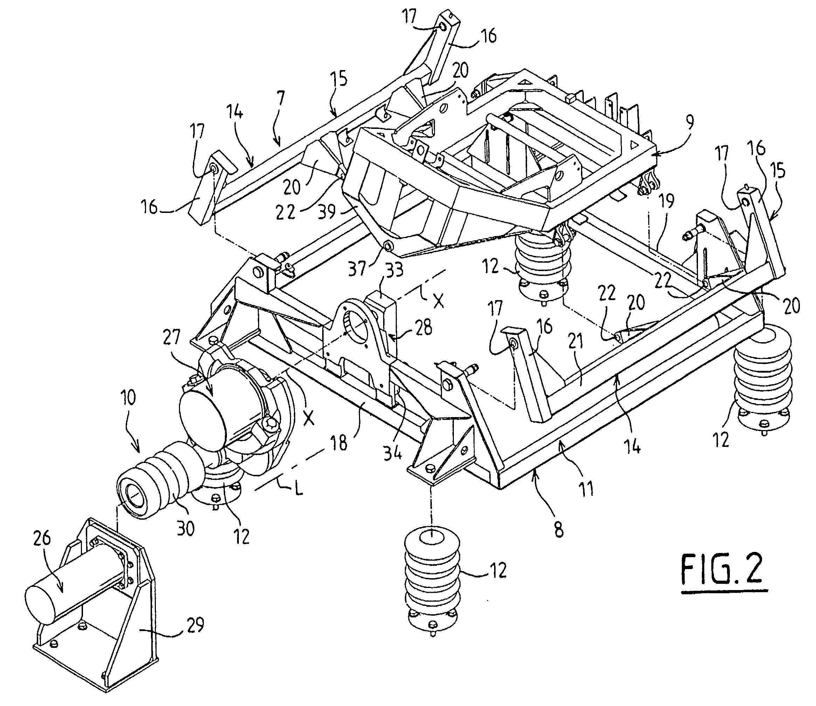

Dans un souci de clarté, la représentation du support 7 a été simplifiée sur la figure 1, mais la figure 2 illustre de manière plus complète sa structure.

Le châssis fixe 8 comprend un cadre 11 de forme sensiblement carrée ou rectangulaire, et quatre isolateurs électriques 12 disposés chacun au niveau d'un coin du cadre 11, sous ce dernier. Le châssis fixe 8 est monté sur le toit 2 par l'intermédiaire des isolateurs électriques 12 qui forment pieds d'appui du châssis 8 sur le toit 2. Les isolateurs 12 maintiennent le cadre 11 fixe 8 espacé du toit 2.

Le châssis mobile 9 est un cadre de dimensions inférieures à celles du cadre 11. Le châssis mobile 9 est disposé à l'intérieur du châssis fixe 8 et relié à celui-ci par deux supports rigides de pendulation 14 disposés de part et d'autre du châssis mobile 9.

Chaque support 14 comporte une partie 15 en U ou étrier, dont les deux branches 16 sont articulées en des points 17 au côté avant 18 et au côté arrière 19 du cadre 11, et deux pattes ou chapes 20, prolongeant la base 21 de l'étrier 15 vers le bas orthogonalement aux branches 16, et articulées en des points 22 à un côté latéral du châssis mobile 9.

Les supports de pendulation 14 ont donc, par rapport à la direction longitudinale L du véhicule 3, un profil transversal coudé, de concavité dirigée vers l'intérieur du support 7 de pantographe.

Les points 17 et 22 sont des points d'articulation autour d'axes parallèles à la direction longitudinale L.

Les points d'articulation 17 des branches 16 et respectivement les points d'articulation 22 des pattes 20 d'un même support de pendulation 14 sont alignés et espacés longitudinalement, c'est-à-dire le long de la direction longitudinale L du véhicule 3.

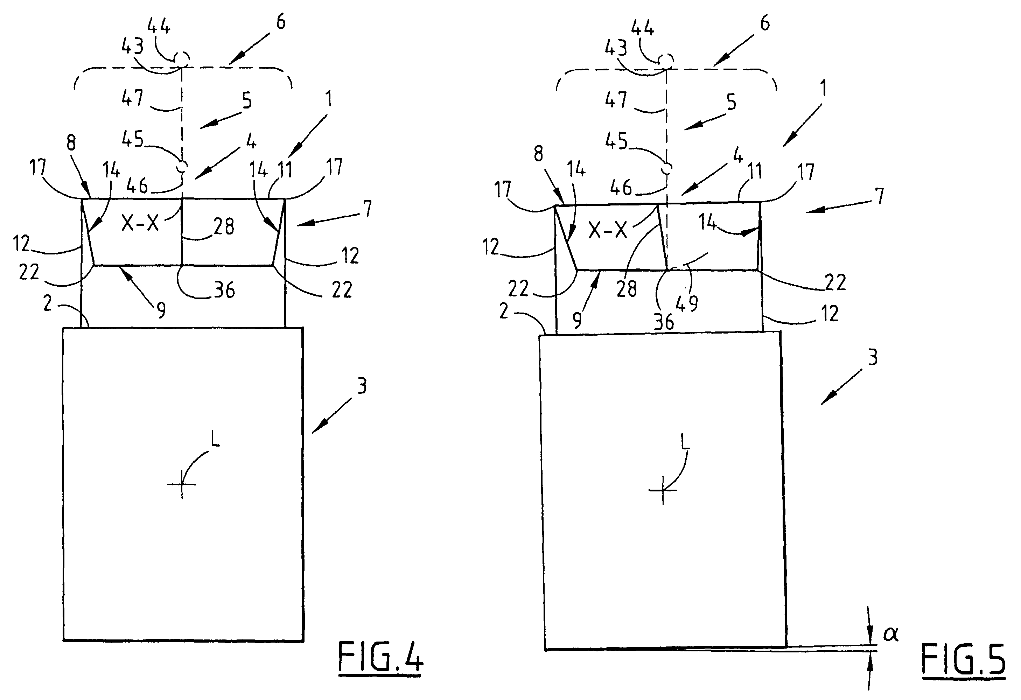

La figure 4 illustre schématiquement la caisse du véhicule 3 en position de repos, c'est-à-dire en l'absence de pendulation et donc avec son toit 2 parallèle à l'axe des essieux de ses bogies et au plan d'une voie ferrée sur laquelle le véhicule 3 se trouve. Sur cette figure, le plan de la voie ferrée est supposé être horizontal et seule la caisse du véhicule 3 et l'ensemble 1 de captage de courant sont représentés. Les points d'articulation 17 et 22 des supports de pendulation 14 aux châssis fixe 8 et mobile 9 forment alors transversalement un trapèze isocèle convergeant vers le bas, c'est-à-dire vers le toit 2 du véhicule ferroviaire 3.

On notera que sur cette figure 4, les supports de pendulation 14 ont été représentées, dans un souci de simplification, comme ayant un profil transversal rectiligne.

La distance séparant latéralement les points d'articulation 17 des deux supports de pendulation 14 est d'environ 870 mm. La distance séparant latéralement les points d'articulation 22 des deux supports de pendulation 14 est d'environ 760 mm. La distance séparant transversalement les points d'articulation 17 et 22 d'un même support de pendulation 14 est d'environ 280 mm. Les points d'articulation 17 des supports de pendulation 14 au châssis fixe 8 sont situés à 540 mm au-dessus du toit 2.

Grâce aux supports de pendulation 14 qui forment deux liaisons oscillantes espacées latéralement l'une de l'autre, le châssis mobile 9 peut penduler latéralement par rapport au châssis fixe 8 de part et d'autre de sa position de repos représentée sur la figure 4, le quadrilatère formé transversalement par les points d'articulation 17 et 22 se déformant alors.

Du fait de la rigidité des supports 14 et de l'espacement longitudinal des points d'articulation 17 et 22, le châssis mobile 9 est guidé de manière satisfaisante dans son mouvement de pendulation avec des mouvements parasites de rotation et de translation limités.

Comme on le voit sur les figures 1 et 2, les moyens 10 de déplacement du châssis mobile 9 sont disposés à l'avant (à gauche sur les figures 1 et 2) du support 7 de pantographe et comprennent un moteur électrique 26, un réducteur 27 et un bras d'entraînement 28.

Le moteur électrique 26 est fixé par un support 29 sur le toit 2 du véhicule ferroviaire 3. Son arbre de sortie non représenté est parallèle à la direction longitudinale L et orienté vers l'arrière. Cet arbre de sortie est relié au réducteur 27 par l'intermédiaire d'un isolateur électrique 30.

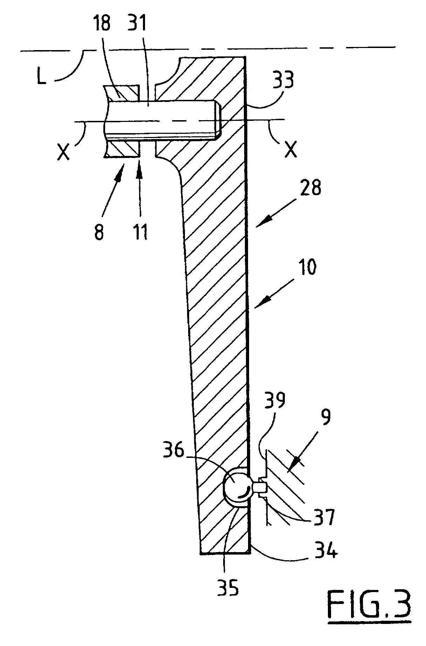

Le réducteur 27 est bridé sur le côté avant 18 du cadre 11 du châssis fixe 8. Son arbre de sortie 31 (figure 3) est parallèle à la direction longitudinale L et s'étend depuis le côté avant 18 du châssis fixe 8 légèrement vers l'arrière.

L'extrémité supérieure 33 du bras d'entraînement 28 est fixée sur cet arbre de sortie 31 si bien que le bras 28 peut pivoter sous l'action du moteur 26 latéralement autour d'un axe X-X parallèle à la direction longitudinale L.

L'extrémité inférieure 34 du bras 28 est munie d'une gorge oblongue 35 s'étendant dans le sens de la longueur du bras 28, à l'arrière de celui-ci. Cette gorge légèrement oblongue 35 reçoit une rotule 36 fixée sur un téton 37 qui fait saillie vers l'avant depuis le côté avant 39 du châssis mobile 9. La rotule 36 et la gorge oblongue 35 forment entre le bras d'entraînement 28 et le châssis mobile 9 une liaison rotulante et coulissant radialement par rapport à l'axe X-X.

Comme illustré schématiquement par la figure 4, la rotule 36, correspondant au point d'articulation du bras 28 au châssis mobile 9, est située au milieu de la petite base du trapèze formé par les points d'articulation 17 et 22. Ainsi, le point d'articulation 36 est situé latéralement à égale distance des points d'articulation 22 des supports de pendulation 14 au châssis mobile 9.

De même l'axe X-X autour duquel le bras 28 peut pivoter est situé latéralement à égale distance des points d'articulation 17 des supports de pendulation 14 au châssis fixe 8. Cet axe X-X est situé légèrement en dessous du niveau de ces points d'articulation 17. Cependant, l'axe X-X a été représenté par souci de clarté sur la grande base du trapèze formé transversalement par les points d'articulation 17 et 22.

L'extrémité inférieure du bras 5 du pantographe 4 est reliée au châssis mobile 9 de manière à solidariser latéralement le bras 5 et le châssis mobile 9.

Les supports de pendulation 14 sont alors disposées latéralement de part et d'autre du pantographe 4.

De manière classique, le bras 5 est déformable entre une position dépliée de captage du courant et une position pliée d'encombrement réduit, pour permettre la translation verticale de l'archet 6 au-dessus du toit 2.

Dans sa position dépliée, illustrée en pointillés sur la figure 4, une région centrale 43 de l'archet 6 du pantographe 4 est appuyée sur un fil de contact 44 d'une caténaire surmontant le véhicule ferroviaire 3.

En position pliée (figure 1), l'articulation intermédiaire 45 du bras 5, reliant son tronçon inférieur 46 et son tronçon supérieur 47, est située en arrière du support 7 de pantographe.

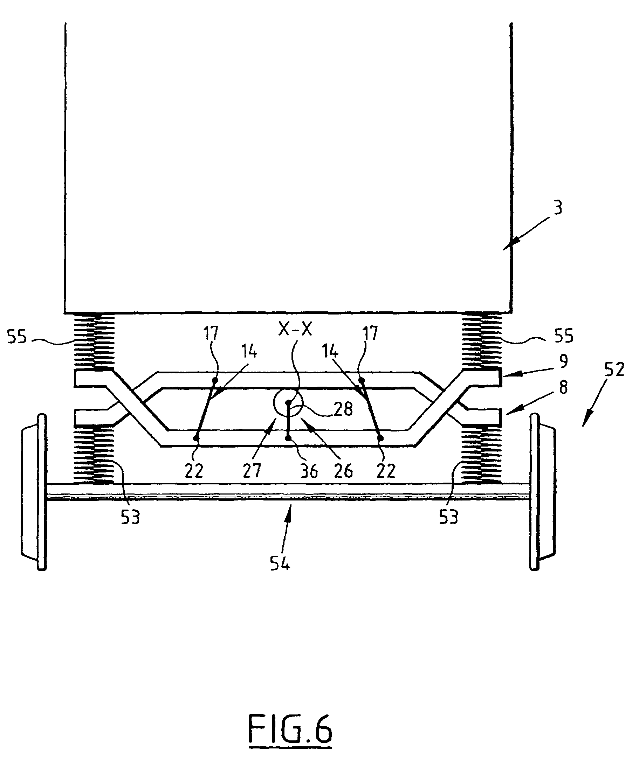

Lorsque le véhicule ferroviaire 3 circule sur une partie de voie ferrée courbe, sa caisse et donc le toit 2 s'incline latéralement d'un angle a vers le centre de courbure de la voie, par exemple vers la gauche comme illustré par la figure 5.

Le moteur 26 est alors piloté par une unité de commande non représentée pour faire pivoter le bras 28 latéralement dans le sens opposé, c'est-à-dire vers la droite sur la figure 5. Le châssis mobile 9 est alors déplacé latéralement par rapport au châssis fixe 8 sous l'action du bras d'entraînement 28 si bien que le bras 5 du pantographe 4 est maintenu sensiblement vertical ou orthogonal à la voie ferrée.

Ainsi, l'archet 6 est maintenu sensiblement horizontal ou parallèle au plan de la voie ferrée et le fil de contact 44 de la caténaire est maintenu en contact avec la région centrale 43 de l'archet 6.

On constate que lorsque le châssis mobile 9 se déplace latéralement au voisinage de sa position de repos, par déformation du quadrilatère formé transversalement par les points d'articulation 17 et 22, le point d'articulation 36 se déplace pratiquement sur un arc de cercle 49 (figure 5) centré sur l'axe X-X.

Ainsi, le bras 28 d'entraînement du châssis mobile 9 permet de déplacer celui-ci de manière satisfaisante pour assurer la contre-pendulation du pantographe 4.

De manière générale, les châssis fixe 8 et mobile 9 ainsi que les liaisons entre ceux-ci seront adaptés pour que le point d'articulation 36 décrive sensiblement un arc de cercle, lorsque le châssis mobile 9 pendule par rapport au châssis fixe 8 pour assurer une contrependulation d'angles de pendulation inférieurs à 10°.

En pratique, la liaison coulissante entre l'extrémité inférieure 34 du bras 28 et le châssis mobile 9 permet d'absorber les légers décalages radiaux de la rotule 36 par rapport à l'arc de cercle 49.

Grâce à la structure des moyens 10 de déplacement du châssis mobile 9, l'encombrement notamment latéral, de l'ensemble 1 de captage de courant est relativement réduit. Par ailleurs, cet ensemble 1 permet d'assurer de manière satisfaisante la contre-pendulation du pantographe 4. De plus, la liaison entre les moyens 10 d'entraînement et le châssis mobile 9 est relativement simple et donc fiable.

On notera que ce principe peut être utilisé de manière plus générale pour un ensemble comprenant un premier châssis et un deuxième châssis pendulant par rapport au premier châssis.

Comme illustré par la figure 6, ce principe peut ainsi s'appliquer à un bogie d'un véhicule ferroviaire pendulaire 3. Le premier châssis 8 comprend alors au moins une traverse prenant appui par des suspensions primaires 53 sur un essieu 54 du bogie, et le deuxième châssis 9 comprend au moins une traverse supportant la caisse du véhicule 3 par l'intermédiaire de suspensions secondaires 55. Dans ce cas, le deuxième châssis 9 porte la caisse du véhicule ferroviaire 3 pour la faire penduler.

Le bras rotatif 28 permet également ici de limiter l'encombrement latéral des moyens 10 de déplacement latéral du deuxième châssis 9.

On notera que sur la figure 6, le trapèze formé par les points d'articulation 17 et 22 est orienté vers le haut, c'est-à-dire dans le sens opposé du sens allant de l'axe X-X vers le point 36.

En revenant aux figures 1 à 5, le fait que les isolateurs électriques 12 fassent partie du châssis fixe 8 permet de réduire encore plus l'encombrement vertical total de l'ensemble 1 de captage de courant par rapport au cas où ces isolateurs sont disposés entre le pantographe 4 et le châssis mobile 9.

Cette caractéristique permet également, de réduire l'encombrement vertical et la masse des éléments de l'ensemble 1 qui pendulent par rapport au châssis fixe 8.

La position des isolateurs 12 contribue donc, de manière séparée, à réduire l'encombrement global de l'ensemble 1 de captage courant.

On notera par ailleurs que le châssis mobile 9 est maintenu à une distance suffisante du toit 2 pour garantir une bonne isolation électrique entre le châssis 9 et le toit 2.

On notera également que le profil transversal des supports de pendulation 14 à concavité dirigée vers l'intérieur du support 7 de pantographe permet d'obtenir un grand débattement angulaire des supports de pantographe 14 dans un volume réduit. Cette caractéristique permet de limiter encore plus l'encombrement de l'ensemble 1 du captage de courant.

Par ailleurs, les supports rigides de pendulation 14 permettent un guidage latéral satisfaisant du châssis mobile 9 avec des frottements limités. Les supports de pendulation 14 permettent donc de s'affranchir des deux vérins latéraux et des guides nécessaires jusqu'à présent pour entraîner de manière satisfaisante le châssis mobile 9.

Les supports rigides de pendulation 14 contribuent donc également, mais de manière séparée, d'une part, à la limitation de l'encombrement de l'ensemble 1 de captage de courant, et d'autre part, à l'obtention d'une contrependulation efficace du pantographe.

De plus, la structure du support 7 du pantographe 4 permet l'utilisation d'un pantographe 4 de structure classique.

Enfin, le bras 28 peut être équipé facilement, selon une variante non représentée, d'un doigt d'indexage du châssis mobile 9 en position de repos. Un tel doigt permet d'assurer un maintien précis du châssis mobile 9 en position de repos, sans apport d'énergie, afin de permettre la circulation du train en cas de panne des moyens 10 de déplacement. Cette variante peut s'appliquer de manière générale à un ensemble comprenant un premier châssis et un deuxième châssis pendulant par rapport au premier châssis, par exemple à l'ensemble décrit en regard de la figure 6.

## Revendications

1. Ensemble (1) pour véhicule ferroviaire, notamment pendulaire, du type comprenant un premier châssis (8), fixe, et un deuxième châssis (9), mobile, relié au premier châssis (8) pour penduler latéralement par rapport à celui-ci de part et d'autre d'une position de repos, l'ensemble (1) comprenant en outre des moyens (10) de déplacement latéral du deuxième châssis (9), le deuxième châssis (9) étant relié au premier châssis (8) par deux liaisons oscillantes (14) espacées latéralement l'une de l'autre, **caractérisé en ce que**, les moyens (10) de déplacement comprennent un bras (28) d'entraînement latéral du deuxième châssis (9) qui est relié à ce dernier en un point (36) situé latéralement sensiblement à égale distance des deux liaisons oscillantes (14) lorsque le châssis (9) est en position de repos, ledit bras (28) étant pivotant à son autre extrémité (33) autour d'un axe longitudinal (X-X) du véhicule, également situé à égale distance des liaisons oscillantes.

2. Ensemble selon la revendication 1, **caractérisé en ce que** le bras (28) d'entraînement est relié au deuxième châssis (9) en un point (36) qui décrit sensiblement un arc de cercle centré sur ledit axe longitudinal (X-X) lorsque le deuxième châssis (9) pendule par rapport au premier châssis (8) au voisinage de sa position de repos.

3. Ensemble selon la revendication 1 ou 2, **caractérisé en ce que** chaque liaison oscillante comprend un support rigide de pendulation (14) articulé, d'une part, au premier châssis (8) en deux points (17) espacés transversalement l'un de l'autre, et d'autre part au deuxième châssis (9) en deux points (22) espacés transversalement l'un de l'autre.

4. Ensemble selon la revendication 3, **caractérisé en ce que** chaque support de pendulation (14) comprend un étrier (15) articulé par ses branches (16) au premier châssis (8), et deux chapes (20) qui prolongent la base de l'étrier (15) et qui sont articulées au deuxième châssis (9).

5. Ensemble selon la revendication 3 ou 4, **caractérisé en ce que** chaque support de pendulation (14) a un profil transversal de concavité dirigée vers l'intérieur de l'ensemble (1).

6. Ensemble selon les revendications 4 et 5 prises ensembles, **caractérisé en ce que** les chapes (20) de chaque support de pendulation (14) sont sensiblement orthogonales aux branches (16) de l'étrier (15) correspondant.

7. Ensemble selon l'une quelconque des revendications 3 à 6, **caractérisé en ce que** les points (17, 22) d'articulation des supports de pendulation (14) aux premier et deuxième châssis (8, 9) forment transversalement, lorsque le deuxième châssis (9) est en position de repos, un trapèze convergeant dans le sens allant dudit axe longitudinal (X-X) vers un point (36) du deuxième châssis (9) auquel le bras d'entraînement (28) est relié.

8. Ensemble selon l'une quelconque des revendications 1 à 7, **caractérisé en ce que** le bras d'entraînement (28) est relié (en 36) au deuxième châssis (9) par une liaison pivotante et coulissante.

9. Ensemble selon l'une quelconque des revendications 1 à 8, **caractérisé en ce que** l'ensemble est un ensemble de captage de courant pour un véhicule ferroviaire comprenant un pantographe (4) et un support de pantographe (7), le support de pantographe (7) comprenant le premier châssis (8), pour monter l'ensemble (1) sur le toit (2) d'un véhicule ferroviaire, et le deuxième châssis (9) qui porte le pantographe (4).

10. Ensemble selon la revendication 9, **caractérisé en ce que** le bras pivotant (28) est relié au deuxième châssis (9) en un point (36) situé en dessous dudit axe longitudinal (X-X) lorsque l'ensemble (1) de captage de courant est monté sur le toit (2) d'un véhicule ferroviaire.

11. Ensemble selon la revendication 9 ou 10, **caractérisé en ce que** le premier châssis (8) comprend les moyens (12, 30) d'isolation électrique du pantographe (4) par rapport au toit (2) d'un véhicule ferroviaire sur lequel l'ensemble (1) est destiné à être monté.

12. Ensemble selon la revendication 11, **caractérisé en ce que** le premier châssis (8) comprend des isolateurs électriques (12) qui forment pieds d'appui du premier châssis (8) sur le toit (2) d'un véhicule ferroviaire.

13. Ensemble selon la revendication 12, **caractérisé en ce que** le premier châssis (8) comprend quatre isolateurs électriques (12) formant pieds d'appui disposés avec une configuration générale de carré ou de rectangle.

14. Ensemble selon l'une quelconque des revendications 9 à 13, **caractérisé en ce que** les moyens (10) de déplacement du deuxième châssis comprennent certains (30) des moyens d'isolation électrique.

15. Ensemble selon l'une quelconque des revendications 1 à 14, **caractérisé en ce que** les moyens (10) de déplacement du deuxième châssis (9) comprennent un moteur rotatif (26) d'actionnement du bras (28) d'entraînement du deuxième châssis (9), et **en ce que** l'arbre de sortie du moteur rotatif (26) est orienté longitudinalement.

16. Ensemble selon les revendications 14 et 15 prises ensemble, **caractérisé en ce que** le moteur rotatif (26) est relié au bras d'entraînement (28) par un isolateur électrique (30).

17. Véhicule ferroviaire, **caractérisé en ce qu'**il comprend un ensemble selon l'une quelconque des revendications 1 à 16.

## Patentansprüche

1. Vorrichtung (1) für ein Schienenfahrzeug, insbesondere für ein Schienenfahrzeug mit Neigetechnik, mit einem ersten, feststehenden Rahmen (8) und einem zweiten, beweglichen Rahmen (9), der mit dem ersten Rahmen (8) verbunden ist, und lateral zu diesem aus beiden Seiten einer Ruhestellung heraus pendelt, wobei die Vorrichtung (1) darüberhinaus Elemente (10) zur seitlichen Verschiebung des zweiten Rahmens (9) besitzt, **dadurch gekennzeichnet, dass** der zweite Rahmen (9) durch zwei oszillierende Verbindungen (14), die in einem Abstand zueinander lateral angeordnet sind, mit dem ersten Rahmen (8) verbunden ist, **dadurch gekennzeichnet, dass** die Verschiebeelemente (10) am zweiten Rahmen (9) einen seitlichen Antriebsarm (28) besitzen, der in einem Punkt (36) mit dem zweiten Rahmen verbunden ist, welcher lateral im wesentlichen im gleichen Abstand zu den beiden oszillierenden Verbindungen (14) angeordnet ist, wenn sich der Rahmen (9) in Ruhestellung befindet, wobei der Arm (28) an seinem anderen Ende (33) um eine Längsachse (X-X) des Fahrzeuges herum, die ebenfalls im gleichen Abstand zu den oszillierenden Verbindungen angeordnet ist, drehend angelenkt ist.

2. Vorrichtung nach Anspruch 1, **dadurch gekennzeichnet, dass** der Antriebsarm (28) in einem Punkt (36) mit dem zweiten Rahmen (9) verbunden ist, der im wesentlichen einen um die Längsachse (X-X) zentrierten Kreisbogen beschreibt, wenn der zweite Rahmen (9) in der Nähe seiner Ruhestellung zum ersten Rahmen (8) pendelt.

3. Vorrichtung nach Anspruch 1 oder 2, **dadurch gekennzeichnet, dass** jede oszillierende Verbindung einerseits am ersten Rahmen (8) in zwei Punkten (17), die quer zueinander beabstandet sind, und andererseits am zweiten Rahmen (9) in zwei Punkten (22), die quer zueinander beabstandet sind, eine gelenkig angebrachte, feststehende Pendelhalterung (14) besitzt,

4. Vorrichtung nach Anspruch 3, **dadurch gekennzeichnet, dass** jede Pendelhalterung (14) einen Bügel (15) besitzt, der mit seinen Schenkeln (16) am ersten Rahmen (8) angelenkt ist, und zwei Abdeckungen (20) in der Verlängerung der Bügelunterseite (15) besitzt, die am zweiten Rahmen (9) angelenkt sind.

5. Vorrichtung nach Anspruch 3 oder 4, **dadurch gekennzeichnet, dass** jede Pendelhalterung (14) ein transversales Hohlprofil besitzt, das zum Innern der Vorrichtung (1) hin gerichtet ist.

6. Vorrichtung nach den Ansprüchen 4 und 5 zusammen, **dadurch gekennzeichnet, dass** die Abdeckungen (20) jeder Pendelhalterung (14) im wesentlichen orthogonal zu den Schenkeln (16) des entsprechenden Bügels (15) angeordnet sind.

7. Vorrichtung nach einem der Ansprüche 3 bis 6, **dadurch gekennzeichnet, dass** die Gelenkpunkte (17, 22) der Pendelhalterungen (14) an dem ersten und zweiten Rahmen (8, 9) transversal ein Trapez bilden, das von der Längsachse (X-X) in Richtung eines Punktes (36) des zweiten Rahmens (9), mit dem der Antriebsarm (28) verbunden ist, zusammenläuft, wenn sich der zweite Rahmen (9) in Ruhestellung befindet.

8. Vorrichtung nach einem der vorhergehenden Ansprüche 1 bis 7, **dadurch gekennzeichnet, dass** der Antriebsarm (28) (in 36) durch eine Dreh- und Gleitverbindung mit dem zweiten Rahmen (9) verbunden ist.

9. Vorrichtung nach einem der vorhergehenden Ansprüche 1 bis 8, **dadurch gekennzeichnet, dass** es sich bei der Vorrichtung um einen Stromabnehmer für ein Schienenfahrzeug mit einem Pantographen (4) und einem Pantographenhalter (9) handelt, wobei der Pantographenhalter (7)den ersten Rahmen (8) aufweist, um die Vorrichtung (1) auf dem Dach (2) eines Schienenfahrzeuges zu montieren, sowie den zweiten Rahmen (9) aufweist, der den Pantographen (4) hält.

10. Vorrichtung nach Anspruch 9, **dadurch gekennzeichnet, dass** der Schwenkarm (28) in einem Punkt (36) unterhalb der Längsachse (X-X) mit dem zweiten Rahmen (9) verbunden ist, wenn der Stromabnehmer (1) auf dem Dach (2) eines Schienenfahrzeugs montiert ist.

11. Vorrichtung nach Anspruch 9 oder 10, **dadurch gekennzeichnet, dass** der erste Rahmen (8) elektrische Isolierelemente (12, 30) des Pantographen (4) zum Dach (2) eines Schienenfahrzeugs besitzt, auf dem die Vorrichtung (1) montiert werden soll.

12. Vorrichtung nach Anspruch 11, **dadurch gekennzeichnet, dass** der erste Rahmen (8) elektrische Isolatoren (12) besitzt, die den ersten Rahmen (8) auf dem Dach (2) eines Schienenfahrzeugs abstützen.

13. Vorrichtung nach Anspruch 12, **dadurch gekennzeichnet, dass** der erste Rahmen (8) vier elektrische Isolatoren (12) besitzt, die eine Abstützung bilden, und die in einer quadratischen oder rechteckigen Konfiguration angeordnet sind.

14. Vorrichtung nach einem der 9 bis 13, **dadurch gekennzeichnet, dass** die Verschiebeelemente (10) des zweiten Rahmens einige (30) der elektrischen Isolierelemente aufweisen.

15. Vorrichtung nach einem der Ansprüche 1 bis 14, **dadurch gekennzeichnet, dass** die Verschiebeelemente (10) des zweiten Rahmens (9) einen Rotationsmotor (26) für den Antrieb des Antriebsarms (28) des zweiten Rahmens (9) aufweisen, und dass die Abtriebswelle des Rotationsmotors (26) längs ausgerichtet ist.

16. Vorrichtung nach den Ansprüchen 14 und 15 zusammen, **dadurch gekennzeichnet, dass** der Rotationsmotor (26) durch einen elektrischen Isolator (30) mit dem Antriebsarm (28) verbunden ist.

17. Schienenfahrzeug, **dadurch gekennzeichnet, dass** es eine Vorrichtung nach einem der Ansprüche 1 bis 16 aufweist.

## Claims

1. Assembly (1) for a railway vehicle, in particular a tilting railway vehicle, of the type comprising a stationary first chassis (8) and a mobile second chassis (9) which is connected to the first chassis (8) to tilt laterally with respect thereto on each side of a position of rest, the assembly (1) further comprising means (10) for moving the second chassis (9) laterally, the second chassis (9) being connected to the first chassis (8) by two laterally-spaced pivoting links (14), the assembly being **characterized in that** the movement means (10) comprise an arm (28) for driving the second chassis (9) laterally, which arm is connected to this second chassis at a point (36) located laterally roughly mid-way between the two pivoting links (14) when the chassis (9) is in the position of rest, said arm (28) being mounted so that it can pivot at its other end (33) about a longitudinal axis (X-X) of the vehicle, also situated mid-way between the pivoting links.

2. Assembly according to Claim 1, **characterized in that** the driving arm (28) is connected to the second chassis (9) at a point (36) which roughly describes an arc of a circle centred on the said longitudinal axis (X-X) when the second chassis (9) tilts with respect to the first chassis (8) in the vicinity of its position of rest.

3. Assembly according to Claim 1 or 2, **characterized in that** each pivoting link comprises a tilting rigid support (14) articulated, on the one hand, to the first chassis (8) at two transversely-spaced points (17) and, on the other hand, to the second chassis (9) at two transversely-spaced points (22).

4. Assembly according to Claim 3, **characterized in that** each tilting support (14) comprises a yoke (15) articulated by its branches (16) to the first chassis (8), and two clevis mounts (20) which extend the base of the yoke (15) and which are articulated to the second chassis (9).

5. Assembly according to Claim 3 or 4, **characterized in that** each tilting support (14) has a transverse profile with its concave aspect facing towards the inside of the assembly (1).

6. Assembly according to Claims 4 and 5 taken together, **characterized in that** the clevis mounts (20) of each tilting support (14) are roughly orthogonal to the branches (16) of the corresponding yoke (15).

7. Assembly according to any one of Claims 3 to 6, **characterized in that** the points (17, 22) by which the tilting supports (14) are articulated to the first and second chassis (8, 9) form, transversely, when the second chassis (9) is in the position of rest, a trapezium which converges, in the direction from the said longitudinal axis (X-X) towards a point (36) on the second chassis (9) to which the driving arm (28) is connected.

8. Assembly according to any one of Claims 1 to 7, **characterized in that** the driving arm (28) is connected (at 36) to the second chassis (9) by a pivoting and sliding link.

9. Assembly according to any one of Claims 1 to 8, **characterized in that** the assembly is a power pick-up assembly for a railway vehicle, comprising a pantograph (4) and a pantograph support (7), the pantograph support (7) comprising the first chassis (8) for mounting the assembly (1) on the roof (2) of a railway vehicle, and the second chassis (9) which carries the pantograph (4).

10. Assembly according to Claim 9, **characterized in that** the pivoting arm (28) is connected to the second chassis (9) at a point (36) located below the said longitudinal axis (X-X) when the power pick-up assembly (1) is mounted on the roof (2) of a railway vehicle.

11. Assembly according to Claim 9 or 10, **characterized in that** the first chassis (8) comprises means (12, 30) for electrically isolating the pantograph (4) from the roof (2) of a railway vehicle on which the assembly (1) is intended to be mounted.

12. Assembly according to Claim 11, **characterized in that** the first chassis (8) comprises electric insulators (12) which form feet for supporting the first chassis (8) on the roof (2) of a railway vehicle.

13. Assembly according to Claim 12, **characterized in that** the first chassis (8) comprises four electric insulators (12) forming support feet arranged in a square or rectangular overall configuration.

14. Assembly according to any one of Claims 9 to 13, **characterized in that** the means (10) for moving the second chassis comprise some (30) of the means of electric isolation.

15. Assembly according to any one of Claims 1 to 14, **characterized in that** the means (10) for moving the second chassis (9) comprise a rotary motor (26) for actuating the arm (28) for driving the second chassis (9), and **in that** the output shaft of the rotary motor (26) is oriented longitudinally.

16. Assembly according to Claims 14 and 15 taken together, **characterized in that** the rotary motor (26) is connected to the driving arm (28) by an electric insulator (30).

17. Railway vehicle, **characterized in that** it comprises an assembly according to any one of Claims 1 to 16.
